(19) Europäisches Patentamt / European Patent Office / Office européen des brevets

(11) **EP 4 280 771 A1**

(12) **EUROPEAN PATENT APPLICATION**
published in accordance with Art. 153(4) EPC

(43) Date of publication:
**22.11.2023 Bulletin 2023/47**

(21) Application number: **22739670.2**

(22) Date of filing: **12.01.2022**

(51) International Patent Classification (IPC):
H04W 72/12 (2023.01)        H04W 72/02 (2009.01)
H04W 76/28 (2018.01)        H04W 28/26 (2009.01)
H04W 4/40 (2018.01)          H04W 92/18 (2009.01)

(52) Cooperative Patent Classification (CPC):
H04W 4/40; H04W 28/26; H04W 72/02;
H04W 72/12; H04W 76/28; H04W 92/18

(86) International application number:
**PCT/KR2022/000555**

(87) International publication number:
**WO 2022/154475 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.01.2021 KR 20210003658**

(71) Applicant: **LG Electronics, Inc.**
**Yeongdeungpo-gu**
**Seoul 07336 (KR)**

(72) Inventors:
• **PARK, Giwon**
  **Seoul 06772 (KR)**
• **SEO, Hanbyul**
  **Seoul 06772 (KR)**
• **LEE, Seungmin**
  **Seoul 06772 (KR)**
• **BACK, Seoyoung**
  **Seoul 06772 (KR)**
• **HONG, Jongwoo**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **SL DRX TIMER OPERATION METHOD AND APPARATUS BASED ON RESOURCE ALLOCATION MODE 2 OPERATION IN NR V2X**

(57)    Proposed is an operation method of a first apparatus (100) in a wireless communication system. The method may comprise the steps of: selecting a first resource and a second resource in a selection window, on the basis of a sensing procedure; transmitting, through a first physical sidelink control channel (PSCCH) on the basis of the first resource, first sidelink control information, SCI, including information related to the second resource, to a second apparatus (200) for performing wireless communication on the basis of a sidelink (SL) discontinuous reception (DRX) configuration; transmitting, on the basis of the first resource, first SL data to the second apparatus 200 through a first physical sidelink shared channel, PSSCH, scheduled by the first SCI; triggering pre-emption related to the second resource; selecting a third resource after the second resource, on the basis of the triggered pre-emption, wherein the third resource before the second resource is not allowed to be selected; transmitting second SCI including information related to the third resource, to the second apparatus (200) through a second PSCCH; and transmitting second SL data to the second apparatus (200) through a second PSSCH scheduled by the second SCI.

EP 4 280 771 A1

# FIG. 16

selecting a first resource and a second resource in a selection window, based on a sensing procedure ~S1610

transmitting, to a second device performing wireless communication based on an SL DRX configuration, first SCI including information related to a second resource through a first PSCCH, based on a first resource ~S1620

transmitting, to a second device, first SL data through a first PSSCH scheduled by first SCI, based on a first resource ~S1630

triggering pre-emption related to a second resource ~S1640

selecting a third resource after a second resource, based on triggered pre-emption ~S1650

transmitting, to a second device, second SCI including information related to a third resource through a second PSCCH ~S1660

transmitting, to a second device, second SL data through a second PSSCH scheduled by second SCI ~S1670

**EP 4 280 771 A1**

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### SUMMARY

According to an embodiment, a method for operating a first device 100 in a wireless communication system is proposed. The method may comprise: selecting a first resource and a second resource in a selection window, based on a sensing procedure; transmitting, to a second device 200 performing wireless communication based on a sidelink, SL, discontinuous reception, DRX, configuration, first sidelink control information, SCI, including information related to the second resource through a first physical sidelink control channel, PSCCH, based on the first resource; transmitting, to the second device 200, first SL data through a first physical sidelink shared channel, PSSCH, scheduled by the first SCI, based on the first resource; triggering pre-emption related to the second resource; selecting a third resource after the second resource, based on the triggered pre-emption, wherein a third resource before the second resource being selected is not allowed; transmitting, to the second device 200, second SCI including information related to the third resource through a second PSCCH; and transmitting, to the second device 200, second SL data through a second PSSCH scheduled by the second SCI.

The user equipment (UE) may efficiently perform retransmission based on hybrid automatic repeat request (HARQ) feedback.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a misunderstanding between a transmitting UE and a receiving UE for an interval in which an SL DRX inactivity timer is operating, according to an embodiment of the present disclosure.
FIG. 9 shows an example in which an SL DRX inactivity timer operates according to an embodiment of the present disclosure.
FIG. 10 shows an example in which an SL DRX inactivity timer operates according to an embodiment of the present disclosure.

3

FIG. 11 shows an example in which an SL DRX inactivity timer operates according to an embodiment of the present disclosure.

FIG. 12 shows an example in which an SL DRX retransmission timer operates according to an embodiment of the present disclosure.

FIG. 13 shows a resource selection method considering the operating time of an SL DRX inactivity timer according to an embodiment of the present disclosure.

FIG. 14 shows a resource selected by a transmitting UE, according to an embodiment of the present disclosure.

FIG. 15 shows a resource selection method in consideration of operation time of an SL DRX inactivity timer, according to an embodiment of the present disclosure.

FIG. 16 shows a procedure in which a first device performs wireless communication, according to an embodiment of the present disclosure.

FIG. 17 shows a procedure in which a second device performs wireless communication, according to an embodiment of the present disclosure.

FIG. 18 shows a communication system 1, based on an embodiment of the present disclosure.

FIG. 19 shows wireless devices, based on an embodiment of the present disclosure.

FIG. 20 shows a signal process circuit for a transmission signal, based on an embodiment of the present disclosure.

FIG. 21 shows another example of a wireless device, based on an embodiment of the present disclosure.

FIG. 22 shows a hand-held device, based on an embodiment of the present disclosure.

FIG. 23 shows a vehicle or an autonomous vehicle, based on an embodiment of the present disclosure.

## DETAILED DESCRIPTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1 GHz, middle frequency bands ranging from 1 GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

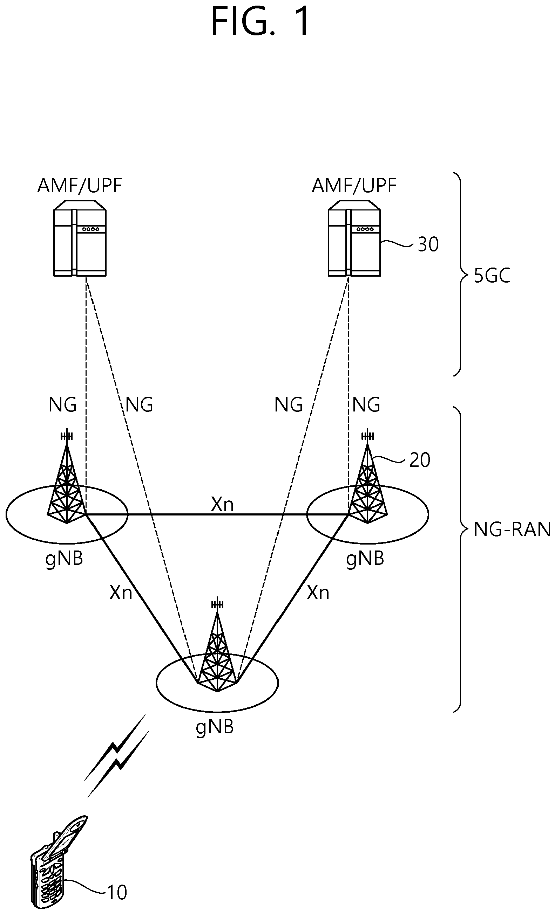

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

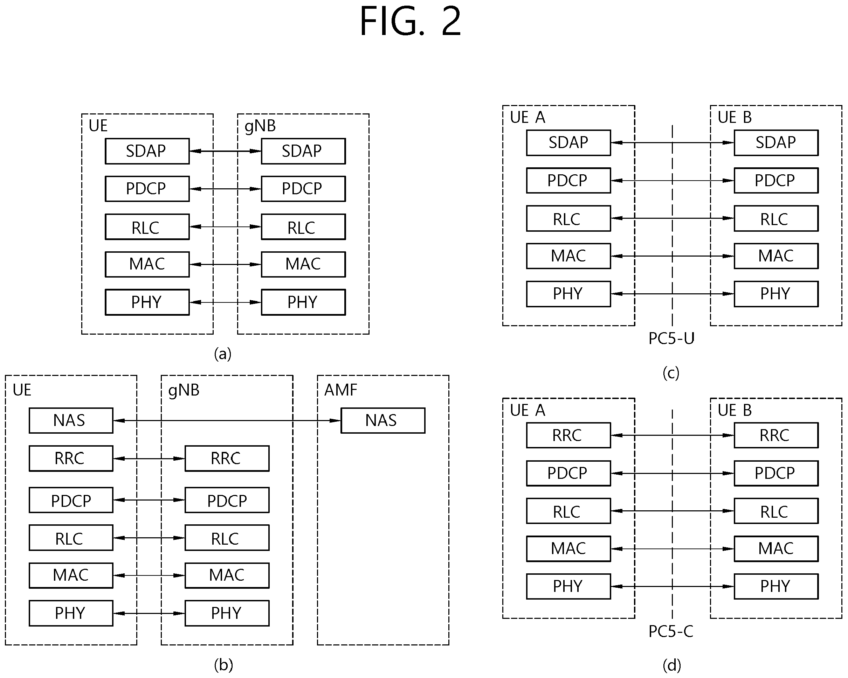

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

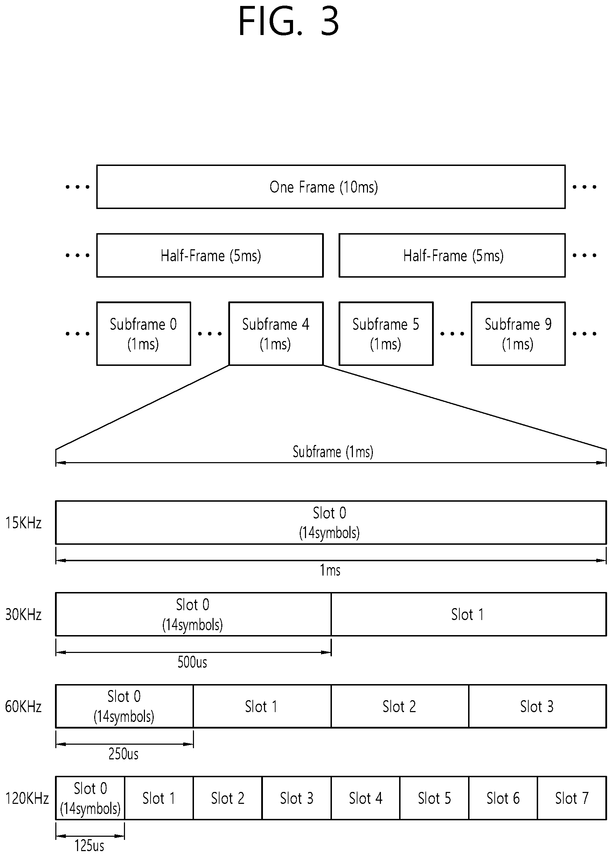

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{Symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

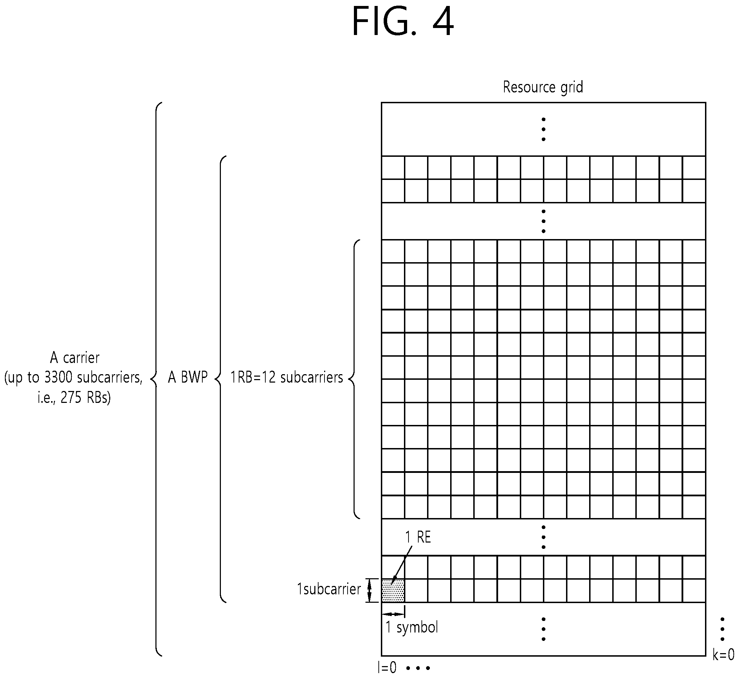

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

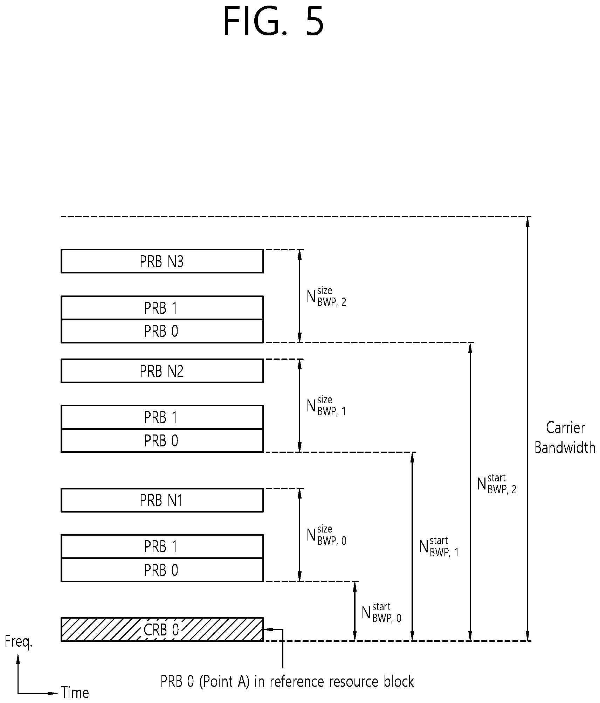

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

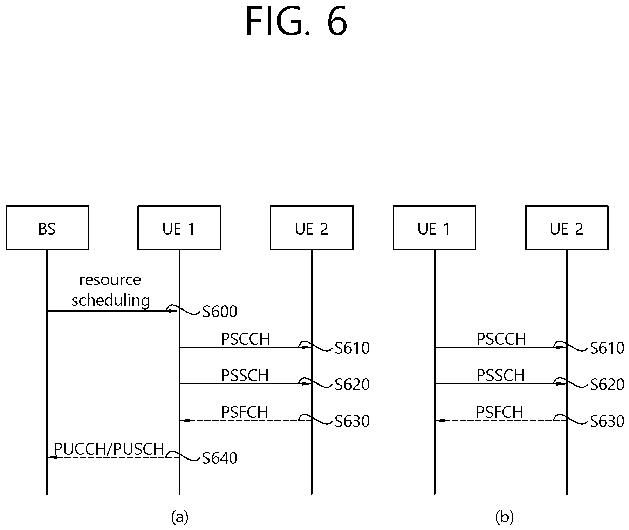

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{SubChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, a UE procedure for reporting HARQ-ACK in the sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \leq k < T'_{max}$) has a PSFCH transmission occasion resource if k mod $N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots associated with a PSFCH slot that is less than or equal to $N^{PSFCH}_{PSSCH}$, the UE allocates the $[(i+j\cdot N^{PSFCH}_{PSSCH})\cdot M^{PSFCH}subch,slot, (i+1+j\cdot N^{PSFCH}_{PSSCH})\cdot M^{PSFCH}subch,slot-1]$ PRBs from the $M_{PRB,set}^{PSFCH}$ PRBs to slot i among the PSSCH slots associated with the PSFCH slot and sub-channel j, where $M^{PSFCH}_{subch,slot} = M^{PSFCH}_{PRB,set}/(N_{subch}\cdot N^{PSFCH}_{PSSCH})$, $0 \leq i < N^{PSFCH}_{PSSCH}$, $0 \leq j < N_{subch}$, and the allocation starts in an ascending order of i and continues in an ascending order of j. The UE expects that $M^{PSFCH}_{PRB,set}$ is a multiple of $N_{subch}\cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type}\cdot M^{PSFCH}_{subch,slot}\cdot N^{PSFCH}_{CS}$ where $N^{PSFCH}_{CS}$ is a number of cyclic shift pairs for the resource pool and, based on an indication by higher layers,

- $N^{PSFCH}_{type}$ = 1 and the $M^{PSFCH}_{subch,slot}$ PRBs are associated with the starting sub-channel of the corresponding PSSCH
- $N^{PSFCH}_{type} = N^{PSSCH}_{subch}$ and the $N^{PSSCH}_{subch}\cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type}\cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 8.

[Table 8]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, a UE procedure for determining a subset of resources to be reported to a higher layer in PSSCH resource selection in sidelink resource allocation mode 2 will be described.

In resource allocation mode 2, a higher layer may request a UE to determine a subset of resources from which the higher layer will select a resource for PSSCH/PSCCH transmission. To trigger this procedure, in slot n, a higher layer provides the following parameters for the PSSCH/PSCCH transmission.

- the resource pool from which the resources are to be reported;
- L1 priority, $prio_{TX}$;
- the remaining packet delay budget (PDB);
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.

it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots in Table X1 where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.
notation:

$$(t'^{SL}_0, t'^{SL}_1, t'^{SL}_2, \dots)$$ denotes the set of slots which belongs to the sidelink resource pool.

For example, a UE may select a set of candidate resources ($S_A$) based on Table 11. For example, when resource (re)selection is triggered, a UE may select a set of candidate resources ($S_A$) based on Table 11. For example, when re-evaluation or pre-emption is triggered, a UE may select a set of candidate resources ($S_A$) based on Table 11.

[Table 11]

| The following steps are used: |
|---|
| 1) A candidate single-slot resource for transmission $R_{x,y}$ is defined as a set of $L_{subCH}$ contiguous sub-channels with sub-channel $x+j$ in slot $t'^{SL}_y$ where $j = 0,\dots, L_{subCH} - 1$. The UE shall assume that any set of $L_{subCH}$ contiguous sub-channels included in the corresponding resource pool within the time interval $[n + T_{1,n} + T_2]$ correspond to one candidate single-slot resource, where |
|      - selection of $T_1$ is up to UE implementation under $0 \le T_1 \le T^{SL}_{proc,1}$ , where $T^{SL}_{proc,1}$ is defined in slots in Table 8.1.4-2 where $\mu_{SL}$ is the SCS configuration of the SL BWP; |
|      - if $T_{2min}$ is shorter than the remaining packet delay budget (in slots) then $T_2$ is up to UE implementation subject to $T_{2min} \le T_2 \le$ remaining packet delay budget (in slots); otherwise $T_2$ is set to the remaining packet delay budget (in slots). The total number of candidate single-slot resources is denoted by $M_{total}$. |
| 2) The sensing window is defined by the range of slots $[n - T_0, n - T^{SL}_{proc,0})$ where $T_0$ is defined above and $T^{SL}_{proc,0}$ is defined in slots in Table 8 1.4-1 where $\mu_{SL}$ is the SCS configuration of the SL BWP. |
|      The UE shall monitor slots which belongs to a sidelink resource pool within the sensing window except for those in which its own transmissions occur. The UE shall perform the behaviour in the following steps based on PSCCH decoded and RSRP measured in these slots. |
| 3) The internal parameter $Th(p_i, p_j)$ is set to the corresponding value of RSRP threshold indicated by the *i*-th field in *sl-Thres-RSRP-List,* where $i = p_i + (p_j - 1) * 8$. |
| 4) The set $S_A$ is initialized to the set of all the candidate single-slot resources. |
| 5) The UE shall exclude any candidate single-slot resource $R_{x,y}$ from the set $S_A$ if it meets all the following conditions: |
|      - the UE has not monitored slot $t'^{SL}_m$ in Step 2. |
|      - for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met. |
| Sa) If the number of candidate single-slot resources $R_{x,y}$ remaining in the set $S_A$ is smaller than $X \cdot M_{total}$, the set $S_A$ is initialized to the set of all the candidate single-slot resources as in step 4. |
| 6) The UE shall exclude any candidate single-slot resource $R_{xy}$ from the set $S_A$ if it meets all the following conditions: |
|      a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively; |
|      b) the RSRP measurement performed, for the received SCI format. 1-A, is higher than $Th(prio_{RX}, prio_{TX})$; |

(continued)

c) the SCI format received in slot $t_m'^{SL}$ or the same SCI format which, if and only if the *'Resource reservation period'* field is present in the received SCI format 1-A, is assumed to be received in slot(s) $t_{m+q \times P'_{rsvp\_RX}}'^{SL}$ determines the set of resource blocks and slots which overlaps with $R_{x,y+j \times P'_{rsvp\_TX}}$ $R_{x,y+j \times P'_{rsvp\_TX}}$ $R_{x,y+j \times P'_{rsvp\_TX}}$ for q=1, 2, ..., Q and j=0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_Rx} < T_{scal}$ and $n' - m \leq P'_{rsvp\_RX}$, where $t_{n'}'^{SL} = n$ if slot $n$ belongs to the set $\left( t_0'^{SL}, t_1'^{SL}, \ldots, t_{T'_{max}-1}'^{SL} \right)$, otherwise slot $t_{n'}'^{SL}$ is the first slot after slot $n$ belonging to the set $\left( t_0'^{SL}, t_1'^{SL}, \ldots, t_{T'_{max}-1}'^{SL} \right)$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r_i'$ from the set $(r_0', r_1', r_2', ...)$ meets the conditions below then the UE shall report pre-emption of the resource $r_i'$ to higher layers

- $r_i'$ is not a member of $S_A$, and

- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:
    - *sl-PreemptionEnable* is provided and is equal to 'enabled' and $prio_{TX} > prio_{RX}$
    - *sl-PreemptionEnable* is provided and is not equal to 'enabled', and $prio_{RX} < prio_{pre}$ and $prio_{TX} > prio_{RX}$

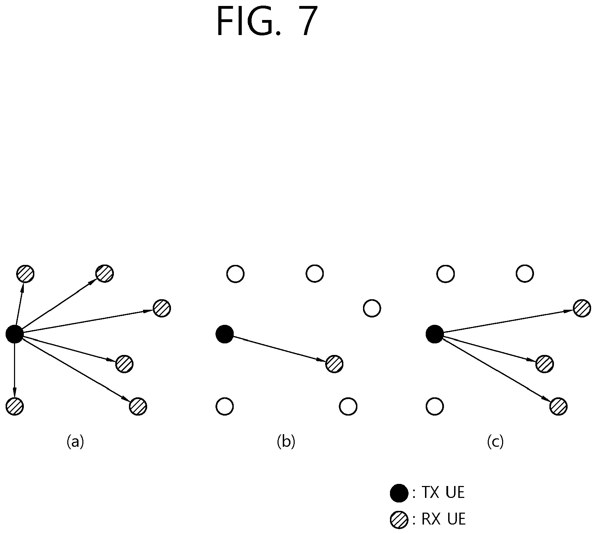

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

In this specification, the "configure or define" wording may be interpreted as being (pre)configured (via pre-defined signaling (e.g., SIB, MAC signaling, RRC signaling)) from a base station or a network. For example, "A may be configured" may include "that a base station or network (pre-)configures/defines or informs A for a UE". Alternatively, the wording "configure or define" may be interpreted as being configured or defined in advance by a system. For example, "A may be configured" may include "A is configured/defined in advance by a system".

Meanwhile, in Release 17 NR sidelink (SL) operation, SL discontinuous reception (DRX) operation is planned to be newly supported. In the embodiment(s) of the present disclosure, an SL DRX operation and an NR resource allocation mode 2 operation of a UE based on an SL DRX inactivity timer are proposed. Also, in the present disclosure, the operation of starting an SL DRX inactivity timer when a receiving UE receives a new transmission transport block (TB) (PSCCH or PSSCH) may be assumed to be the prior art. In the following description, 'when, if, in case of may be replaced with 'based on'.

For example, in NR SL mode 2 operation, a transmitting UE may indicate to a receiving UE a plurality of resources related to a new TB or a retransmission TB through a PSCCH (SCI), also may perform an SL transmission using the indicated plurality of resources.

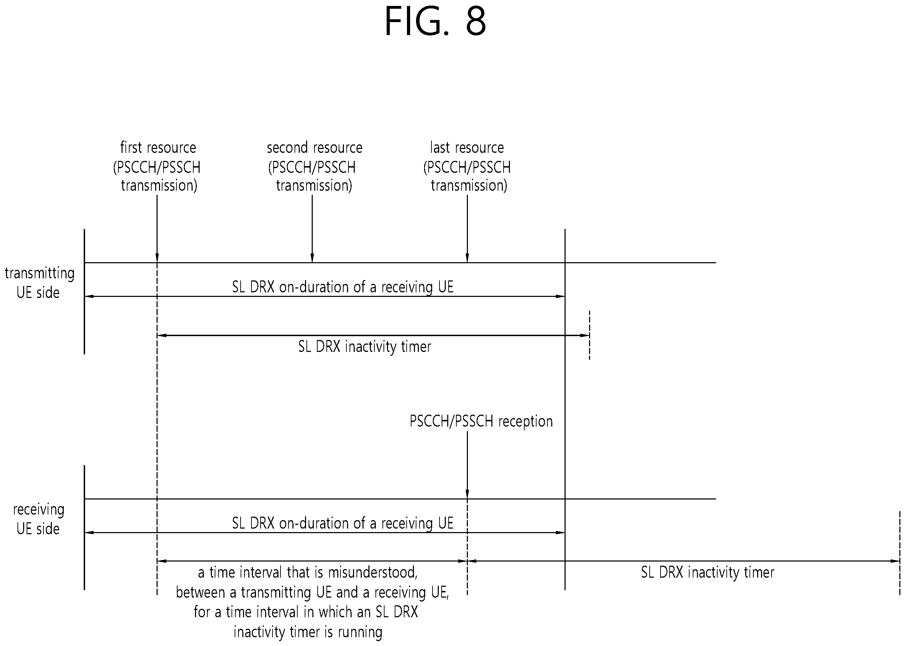

FIG. 8 shows a misunderstanding between a transmitting UE and a receiving UE for an interval in which an SL DRX inactivity timer is operating, according to an embodiment of the present disclosure. The embodiment of FIG. 8 may be combined with various embodiments of the present disclosure.

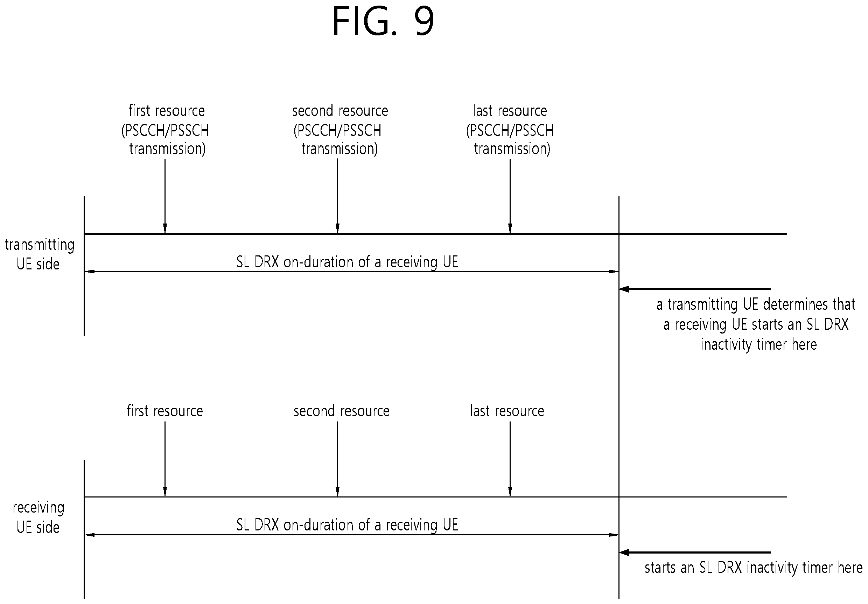

Referring to FIG. 8, when a transmitting UE performs transmission for a new TB (PSCCH/PSSCH) using a first resource, a second resource, and a third resource, the transmitting UE may determine that a receiving UE has started an SL DRX inactivity timer at the time of the first resource. On the other hand, for example, the receiving UE couldn't receive the first transmission and the second transmission transmitted by the transmitting UE, but may successfully receive only the last transmission. In this case, the receiving UE may start an SL DRX inactivity timer at the resource domain time for the last transmission (or the last transmission reception time or the time of transmitting the PSFCH for reception of the last transmission). In this case, for example, as shown in FIG. 9, a problem in which misalignment occurs with respect to the start time of the SL DRX inactivity timer between the transmitting UE and the receiving UE may occur. For example, in this case, an error may occur in an SL DRX operation of a UE. For example, a problem that while the transmitting UE determines that the receiving UE is operating in the sleep mode (because it is determined that the SL DRX inactivity timer has expired), the receiving UE may operate in an active time (because the SL DRX inactivity timer expires with a delay from the time the transmitting UE thinks) may occur.

In the present disclosure, a method for solving the misalignment with respect to the start time of the SL DRX inactivity timer between the transmitting UE and the receiving UE mentioned in the above problem is proposed.

FIG. 9 shows an example in which an SL DRX inactivity timer operates according to an embodiment of the present disclosure. The embodiment of FIG. 9 may be combined with various embodiments of the present disclosure.

Referring to FIG. 9, a method in which a receiving UE starts an SL DRX inactivity timer when its SL DRX on-duration timer expires is proposed. For example, a method is proposed in which a transmitting UE also determines/considers/assumes that a receiving UE has started an SL DRX inactivity timer when an SL DRX on-duration timer of the receiving UE expires.

Or, for example, a method of starting an SL DRX inactivity timer at the time when a receiving UE starts its SL DRX on-duration timer is proposed. For example, a method of determining/considering/assuming that a receiving UE has started an SL DRX inactivity timer at the start time of an SL DRX on-duration timer of the receiving UE, by a transmitting UE also is proposed. For example, the timer start time may be replaced with a predetermined time after the timer start time and a predetermined time before the timer expiration time, the predetermined time may be a pre-configured value and/or a value indicated by an upper layer/physical layer signal.

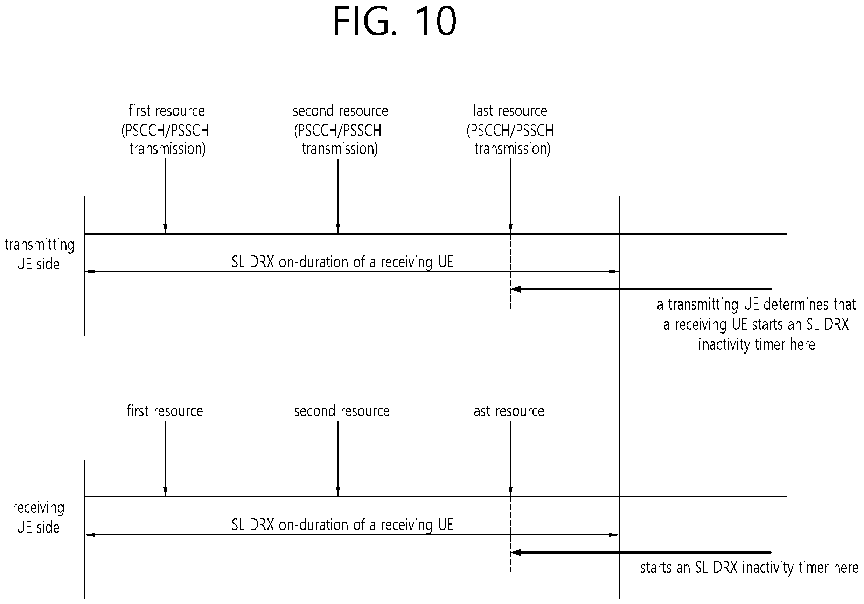

FIG. 10 shows an example in which an SL DRX inactivity timer operates according to an embodiment of the present disclosure. The embodiment of FIG. 10 may be combined with various embodiments of the present disclosure.

Referring to FIG. 10, an embodiment in which misalignment with respect to the start time of an SL DRX inactivity timer between a transmitting UE and a receiving UE can be resolved is shown. That is, for example, a method is proposed in which a receiving UE starts an SL DRX inactivity timer in the last resource region time (or the time when the last transmission received time or when the PSFCH was transmitted for the reception of the last transmission) reserved by a transmitting UE through SCI within its (receiving UE) SL DRX on-duration region. For example, a method for determining/considering/assuming, by the transmitting UE also, that the receiving UE started an SL DRX inactivity timer in an SL DRX on-duration region of the receiving UE, in the last resource region time (or the last transmission time) reserved by the transmitting UE through SCI is proposed.

Or, for example, a method in which the receiving UE starts the SL DRX inactivity timer in the first resource region time (or the time of transmitting a PSFCH for the reception of the first transmission or the reception of the first transmission) reserved by a transmitting UE through SCI within its (receiving UE) SL DRX on-duration region is proposed. For example, a method for determining/considering/assuming, by the transmitting UE also, that the receiving UE started an SL DRX inactivity timer in an SL DRX on-duration region of the receiving UE, in the first resource region time (or the first transmission time) reserved by the transmitting UE through SCI is proposed.

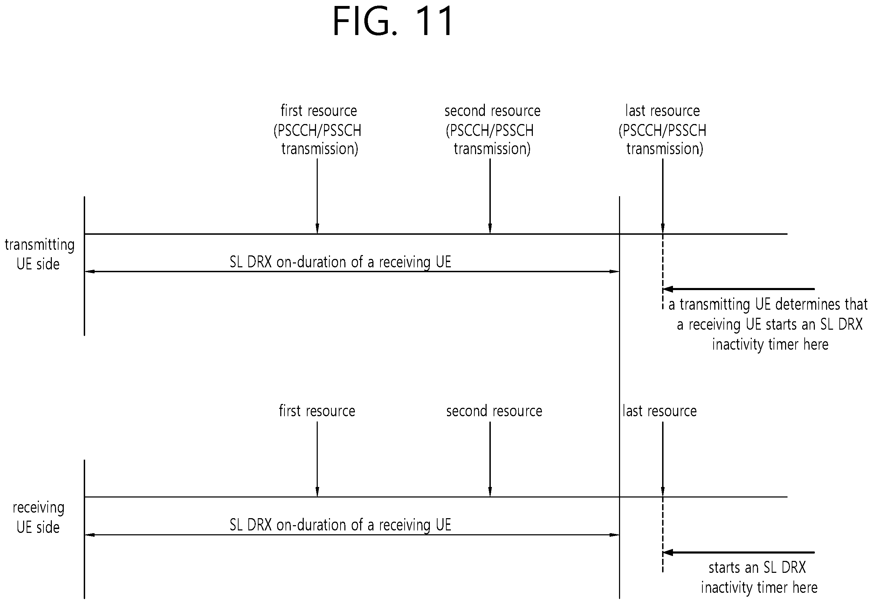

FIG. 11 shows an example in which an SL DRX inactivity timer operates according to an embodiment of the present disclosure. The embodiment of FIG. 11 may be combined with various embodiments of the present disclosure.

Referring to FIG. 11, an embodiment in which misalignment with respect to the start time of an SL DRX inactivity timer between a transmitting UE and a receiving UE can be resolved is shown. For example, FIG. 11 shows an embodiment when an indicated last transmission resource is out of the SL DRX on-duration of a receiving UE, when a transmitting UE instructs transmission resources through SCI related to a new TB or a retransmission TB to the receiving UE.

Referring to FIG. 11, when the last resource region time (or the last transmission reception time or the time of transmitting a PSFCH for reception of the last transmission) reserved by a transmitting UE through SCI is out of an SL DRX on-duration region of ae receiving UE, when the SL DRX on-duration expires, the receiving UE may transition to the sleep mode and may operate in the sleep mode until the last transmission resource region time indicated by a transmitting UE through SCI. In addition, for example, a method for starting an SL DRX inactivity timer, by the receiving UE, by transitioning to an active mode when it is reached to the last transmission resource interval time that the transmitting UE indicated through SCI is proposed. For example, a method for determining/considering/assuming, by the transmitting UE also, that the receiving UE started an SL DRX inactivity timer at the last resource region time (or, the last transmission time) reserved by the transmitting UE through SCI is proposed.

Or, for example, when the last resource region time (or the last transmission reception time or the time of transmitting a PSFCH for reception of the last transmission) reserved by a transmitting UE through SCI is out of an SL DRX on-duration region of a receiving UE, the receiving UE may start an SL DRX inactivity timer when the SL DRX on-duration expires, and the transmitting UE also may determine/consider/assume that the receiving UE started an SL DRX inactivity timer at this time.

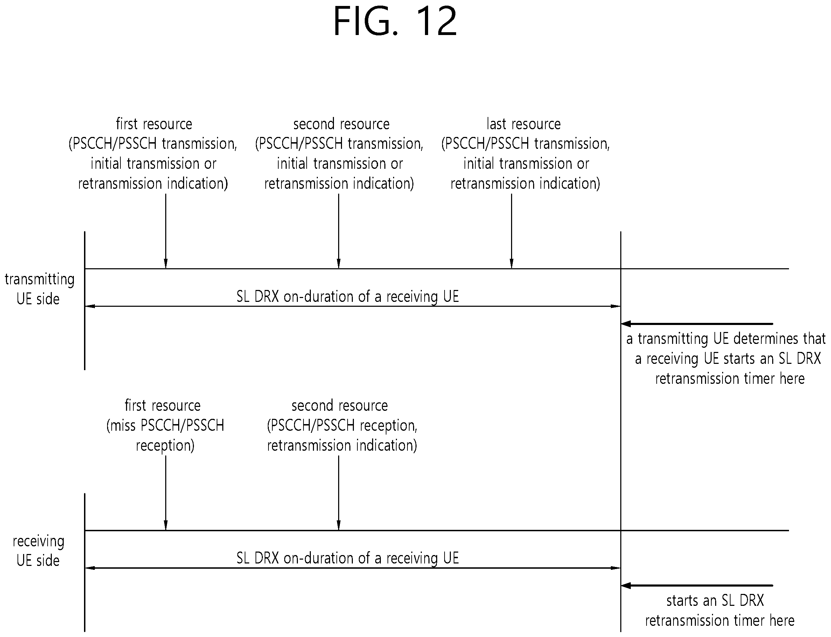

FIG. 12 shows an example in which an SL DRX retransmission timer operates according to an embodiment of the present disclosure. The embodiment of FIG. 12 may be combined with various embodiments of the present disclosure.

Referring to FIG. 12, a method for transferring, by a transmitting UE, to a receiving UE whether the current transmission (transmission performed based on the transmission resource indicated by SCI) of the transmitting UE is an initial transmission or a retransmission by indicating it through SCI is proposed. For example, after the receiving UE checks the SCI transmitted by the transmitting UE, when it is indicated that the current transmission is a retransmission, the receiving UE may start an SL DRX retransmission timer or an SL DRX HARQ RTT timer instead of an SL DRX inactivity timer.

Also, for example, the receiving UE may need to determine when to start an SL DRX inactivity timer or an SL DRX retransmission timer (or SL DRX HARQ RTT timer). For example, in FIG. 12, a method of starting an SL DRX inactivity timer or an SL DRX retransmission timer (or SL DRX HARQ RTT timer) by assuming the time when the SL DRX on-duration expires as a reference time, by the receiving UE, is proposed. For example, when the receiving UE successfully receives a PSCCH/PSSCH transmitted by the transmitting UE, and the transmitting UE indicates the receiving UE that the current transmission is an SL initial transmission through SCI, the receiving UE may start an SL DRX inactivity timer at the expiration of SL DRX on-duration.

For example, the SL DRX inactivity timer may be a timer operated by a receiving UE to receive SL initial transmission data transmitted by a transmitting UE. For example, the SL DRX retransmission timer may be a timer operated by the receiving UE to receive SL retransmission data retransmitted by a transmitting UE. For example, a receiving UE may determine/consider/assume that a transmitting UE will transmit an SL retransmission packet after an SL DRX HARQ RTT timer expires, therefore, while the SL DRX HARQ RTT timer is in operation, the receiving UE may operate in a sleep mode. And, after expiration of the SL DRX HARQ RTT timer, the receiving UE may transition to the active mode, start an SL DRX retransmission timer, and receive SL retransmission data transmitted by the transmitting UE.

Referring to FIG. 12, an embodiment where a receiving UE successfully receives a PSCCH/PSSCH transmitted by a transmitting UE, and the transmitting UE indicates to the receiving UE that the current transmission is an SL retransmission through SCI is shown. Since the current transmission is an SL retransmission, the receiving UE may start an SL DRX retransmission timer (or SL DRX RTT timer) at the expiration of SL DRX on-duration. In addition, the transmitting UE may perform SL DRX operation in the expiration time of the SL DRX on-duration by determining/considering/assuming that the receiving UE has started the SL DRX retransmission timer (or SL DRX RTT timer). That is, for example, the transmitting UE may synchronize the SL DRX timer start time and the expiration time between the transmitting UE and the receiving UE, and perform the SL DRX operation based on this.

According to an embodiment of the present disclosure, a resource reservation method of a transmitting UE that allows all transmissions transmitted based on a plurality of resources reserved by the transmitting UE through SCI for the same or different transmission to be delivered to a receiving UE in an operation period of an SL DRX on-duration timer or an SL DRX inactivity timer of the receiving UE, or the operation period of an SL DRX timer is proposed. For example, the same transmission may mean transmission of multiple MAC PDUs constituting the same TB or repeated transmission of one MAC PDU. For example, the different transmissions may include transmission of a plurality of MAC PDUs for different TBs. For example, the SL DRX timer of the receiving UE may include a timer (e.g., SL DRX retransmission timer) allowing the receiving UE to operate in an active time.

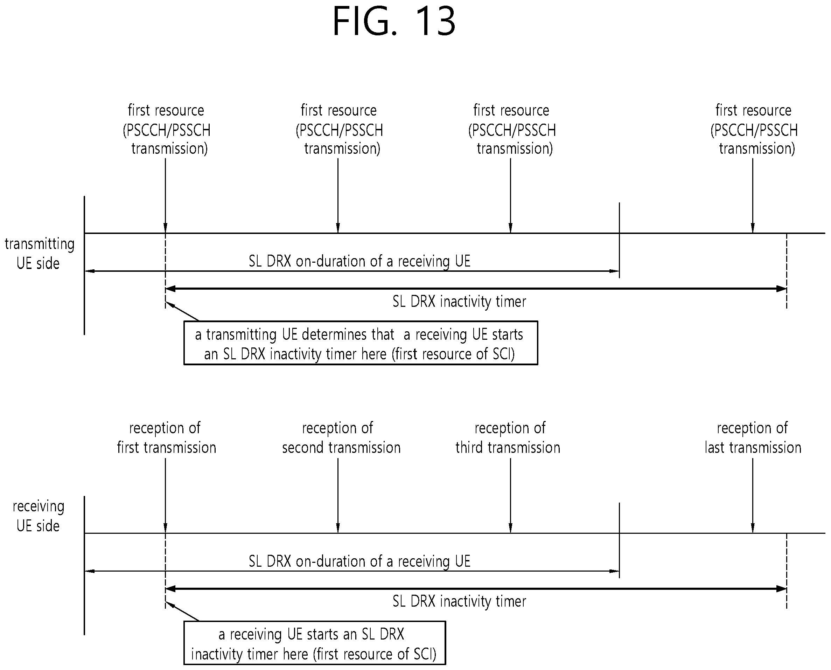

FIG. 13 shows a resource selection method considering the operating time of an SL DRX nactivity timer according to an embodiment of the present disclosure. The embodiment of FIG. 13 may be combined with various embodiments of the present disclosure.

Referring to FIG. 13, when a transmitting UE reserves transmission resources, for example, when a transmission UE selects 5 transmission resources because 5 transmission resources are required for transmission of a plurality of MAC PDUs constituting the same TB, the transmission UE may simultaneously select 5 transmission resources when selecting the first resource. Also, for example, the 5 transmission resources may be reserved through 5 SCIs as follows. For example, up to three transmission resources may be reserved through one SCI, and five transmission resources may be reserved in a chain form as follows.

Reserved resources indicated in the first SCI: the first resource for the first transmission, the second resource for the second transmission, the third resource for the third transmission

Reserved resources indicated in the second SCI: the second resource for the second transmission, the third resource for the third transmission, the fourth resource for the fourth transmission

Reserved resources indicated in the third SCI: the third resource for the third transmission, the fourth resource for the fourth transmission, the last (fifth) resource for the last transmission

Reserved resources indicated in the fourth SCI: the fourth resource for the fourth transmission, the last (fifth) resource for the last transmission

A reserved resource indicated in the fifth SCI: the last (fifth) resource for the last transmission

Also, for example when the receiving UE receives a PSSCH transmitted based on a first resource reserved by the transmitting UE through first SCI, the receiving UE may start an SL DRX inactivity timer or a SL DRX timer and perform monitoring for receiving a PSSCH or PSCCH additionally transmitted by the transmitting UE. In addition, the transmitting UE may know the duration of the SL DRX inactivity timer or the SL DRX timer initiated by the receiving UE. For example, the transmitting UE may know the duration of the SL DRX inactivity timer or the SL DRX timer initiated by the receiving UE through pre-negotiation. Accordingly, the transmitting UE may select and reserve a resource so that transmission through the transmission resource reserved for its own transmission is performed within an SL DRX inactivity timer or SL DRX timer period of the receiving UE. That is, when the transmitting UE performs the same transmission or different transmission through 3+N transmissions, the transmitting UE may select resources for N transmissions within a time interval before an SL DRX inactivity timer or an SL DRX timer expires, which is started due to a first transmission.

Referring to FIG. 13, an embodiment where a transmitting UE selects a resource, and also reserves the selected resource through SCI, and transmits a PSSCH through the reserved resource so that transmission through the transmission resource reserved by the transmitting UE is performed within an operation period of an SL DRX timer of a receiving UE is shown. For example, if the method proposed in this disclosure is not considered, a problem may occur in that the transmitting UE must perform remaining SL transmission (remaining transmission in reserved resources) in a period outside an SL DRX timer of a receiving UE (or a time period after expiration).

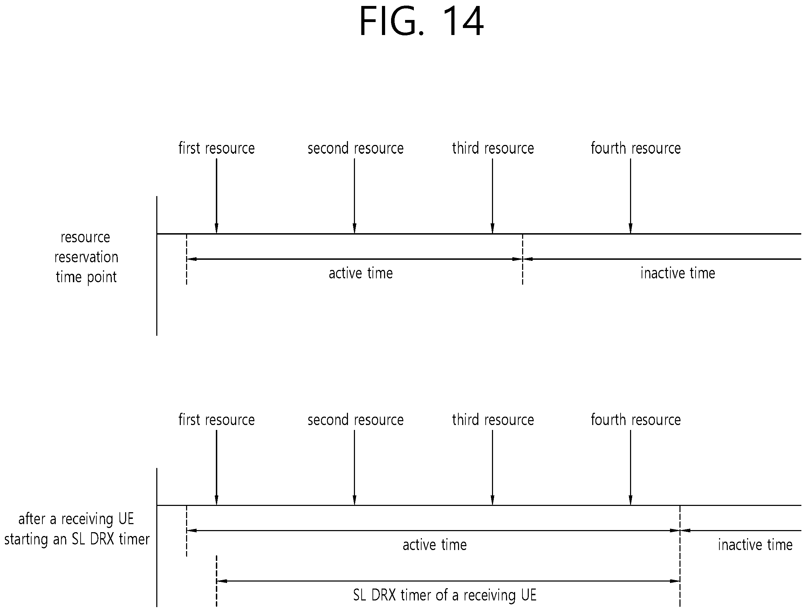

FIG. 14 shows a resource selected by a transmitting UE, according to an embodiment of the present disclosure. The embodiment of FIG. 14 may be combined with various embodiments of the present disclosure.

Referring to FIG. 14, a first to fourth resources reserved by a transmitting UE through resource selection is represented. For example, the first resource to the third resource may be included in active time at the resource reservation time point of a receiving UE. That is, the transmitting UE may select the first resource to the third resource within an active time of the resource reservation time of the receiving UE. For example, the active time at the resource reservation time point may be a time during which an SL DRX on-duration timer, an SL DRX inactivity timer, etc. of the receiving UE are operating on the basis of the resource reservation time point. And, the fourth resource may be included outside the active time at the resource reservation time point of the receiving UE, that is, the inactive time at the resource reservation time point of the receiving UE.

For example, a receiving UE may receive SL data through PSCCH/PSSCH based on the first resource to the third resource. And, the receiving UE may start an (additional) SL DRX timer (e.g., SL DRX inactivity timer, SL DRX retransmission timer, etc.) based on the received SL data. Due to the SL DRX timer started based on the received SL data, an active time after starting the SL DRX timer of the receiving UE may be extended. Here, for example, the fourth resource may be included in active time after starting the SL DRX timer of the receiving UE. That is, the transmitting UE may select the fourth resource in an inactive time at the resource reservation time point of the receiving UE, bearing in mind that the SL DRX timer would be started due to the SL data.

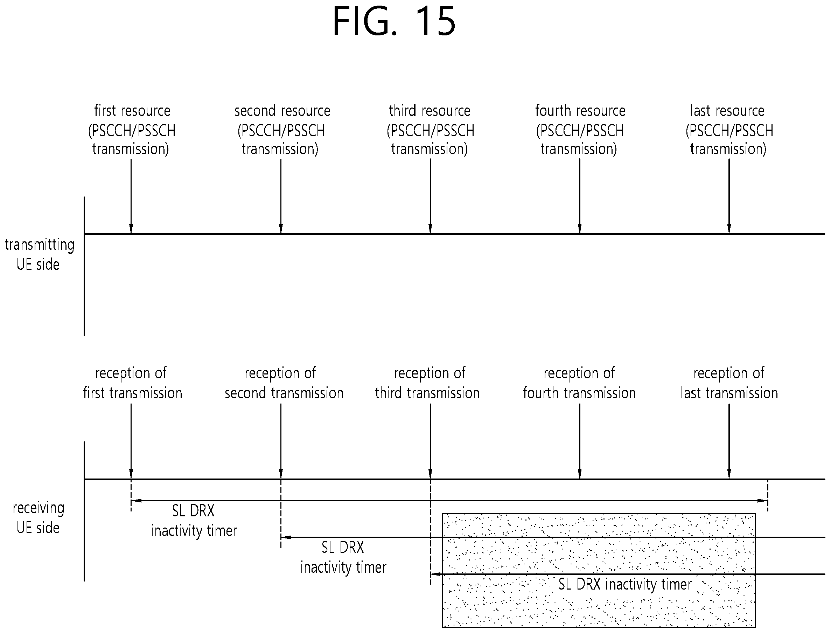

According to an embodiment of the present disclosure, a method for allowing an SL transmission transmitted by a transmitting UE to be successfully received by a receiving UE in an SL DRX operation is proposed as follows. For example, in FIG. 15, an embodiment in which an SL DRX inactivity timer is assumed/premised/set/configured to be started when a receiving UE receives the first transmission transmitted by a transmitting UE is represented. For example, the first transmission may mean transmission using a first resource among (maximum) three resources reserved by the transmitting UE through SCI.

FIG. 15 shows a resource selection method in consideration of operation time of an SL DRX inactivity timer, according to an embodiment of the present disclosure. The embodiment of FIG. 15 may be combined with various embodiments of the present disclosure.

Referring to FIG. 15, when a transmitting UE selects 5 resources for one SL TB transmission and reserves the 5 selected resources through SCI, the transmitting UE may perform SL TB transmission to a receiving UE using the five reserved resources. For example, the transmitting UE may reserve the 5 selected resources through SCI as follows, and transmit PSCCH(SCI)/PSSCH during each transmission.

Reserved resources indicated in first SCI (SCI linked to a first PSSCH transmission, first transmission in FIG. 15): a first resource for a first transmission, a second resource for a second transmission, a third resource for a third transmission

Reserved resources indicated in second SCI (SCI linked to a second PSSCH transmission, second transmission in FIG. 15): a second resource for a second transmission, a third resource for a third transmission, a fourth resource for a fourth transmission

Reserved resources indicated in third SCI (SCI linked to a third PSSCH transmission, third transmission in FIG. 15): a third resource for a third transmission, a fourth resource for a fourth transmission, a last (fifth) resource for a last transmission

Reserved resources indicated in fourth SCI (SCI linked to a fourth PSSCH transmission, fourth transmission in FIG. 15): a fourth resource for a fourth transmission, a last (fifth) resource for a last transmission

A reserved resource indicated in fifth SCI (SCI linked to a fifth PSSCH transmission, last transmission in FIG. 15): a last (fifth) resource for a last transmission

For example, the receiving UE may start an SL DRX inactivity timer when receiving a first transmission transmitted by the transmitting UE. If the receiving UE misses the reception of the first transmission and receives a second transmission for the first, the receiving UE may determine the second transmission as the first transmission and start an SL DRX inactivity timer. If the receiving UE misses the reception of the first transmission and the second transmission and receives the third transmission first, the receiving UE may determine the third transmission as the first transmission and start an SL DRX inactivity timer.

That is, for example, since up to three transmission resources are reserved through SCI, and the reserved transmission resources are indicated through the SCI, When the receiving UE receives the SCI (PSCCH) for the first transmission transmitted by the transmitting UE, the receiving UE may know that the transmitting UE will transmit up to a third transmission resource. That is, the receiving UE may know by decoding SCI, in which time/frequency domain the transmitting UE will transmit a PSSCH for up to three transmissions.

Subsequently, when the receiving UE receives SCI (PSCCH) for a second transmission transmitted by a transmitting UE, the receiving UE may know that the transmitting UE will transmit up to a fourth transmission resource. When the receiving UE receives SCI (PSCCH) for a third transmission transmitted by the transmitting UE, the receiving UE may know that the transmitting UE will transmit up to a fifth transmission resource. That is, for example, when the receiving UE misses reception of a first transmission among the three transmissions indicated by the transmitting UE in one SCI, the receiving UE may have to receive SCI linked to a second transmissions in order to receive fourth and fifth transmissions, when the receiving UE misses receptions of first transmission and second transmission, the receiving UE may have to receive SCI linked to a third transmission in order to receive fourth and fifth transmissions, when the receiving UE misses receptions of first transmission, second transmission, and third transmission, the receiving UE may have to receive new SCI (it is because up to three resources can be reserved in one SCI) linked to a fourth transmission in order to receive a fourth and fifth transmissions.

Thus, for example, in the present disclosure, in order for a receiving UE to successfully receive a PSSCH transmitted by a transmitting UE using a resource (a resource for the fourth transmission and a resource for the last transmission in FIG. 15) immediately following a resource reserved through initial SCI, a method of selecting, by the transmitting UE, a resource for a fourth transmission and/or a fifth transmission (that is, an SL transmission transmitted using the resource immediately following the last transmission resource indicated in the first SCI or the current SCI) and transmitting to the receiving UE, in an operation region of the overlapping SL DRX inactivity timer when it is assumed that the receiving UE started an SL DRX inactivity timer by receiving each PSSCH (first transmission, second transmission, and third transmission) transmitted using three resources indicated by the transmitting UE through SCI, is proposed. For example, the overlapping operation region of the SL DRX inactivity timer may be the time region indicated in FIG. 15, that is, from the time point when the third transmission is received in FIG. 15 to the time point when the timer started at the reception time of the first transmission ends. That is, for example, within the (time) region where three SL DRX inactivity timers (or SL DRX on-duration timers or SL DRX retransmission timers) that are started by each of three transmissions (all) overlap, the transmitting UE may select a resource for the fourth transmission and/or the fifth transmission.

An SL DRX timer mentioned in this disclosure may be used for the following purposes.

SL DRX On-Duration Timer: it may be a timer related to a period that should exist as an active time from the start of an SL DRX cycle in order for a receiving UE to monitor a PSCCH or PSSCH of a transmitting UE when the SL DRX cycle is configured. For example, when an SL DRX on-duration timer expires, a UE may transition to SL sleep mode.

SL DRX inactivity timer: It may be a timer that starts when a receiving UE receives a PSCCH/PSSCH from a transmitting UE. For example, the receiving UE may operate in an SL active state during a timer operation period, and may monitor a PSCCH/PSSCH transmitted by the transmitting UE.

SL DRX HARQ RTT timer: it may be a timer that starts when a receiving UE receives a PSSCH transmitted by a transmitting UE and transmits SL HARQ feedback (e.g., HARQ NACK). For example, the receiving UE may determine that the transmitting UE will not transmit an SL retransmission packet until the timer expires, and may operate in SL sleep mode until the timer expires. For example, when the SL DRX HARQ RTT timer expires, the receiving UE may transition to an SL active state, and may monitor/receive an SL retransmission packet transmitted by the transmitting UE.

SL DRX retransmission timer: it may be a timer that enables a receiving UE to transition to an SL active state when an SL DRX HARQ RTT timer expires to monitor/receive an SL retransmission packet transmitted by a transmitting UE. For example, the receiving UE may monitor/receive the SL retransmission packet transmitted by the transmitting UE while the timer is running.

The term on-duration mentioned in the proposal of the present disclosure may be extended and interpreted as an active time interval. For example, the active time region may mean a period operating in a wake up state (RF module is "On") in order to receive/transmit a radio signal. In addition, for example, whether the (some) proposed method/rule of the present disclosure is applied and/or related parameters (e.g., threshold values) may be configured specifically (or differently or independently), according to resource pool, congestion level, service priority (and/or type), requirements (e.g., delay, reliability), traffic type (e.g., (non-) periodic generation), SL transmission resource allocation mode (Mode 1, Mode 2), etc.

For example, the name of an SL DRX inactivity timer is exemplary, and a similar name may be used for referring to a timer related to DRX inactivity in SL. For example, the name of an SL DRX HARQ RTT timer is exemplary, and a similar name may be used for referring to a timer related to HARQ RTT in SL. For example, the name of an SL DRX retransmission timer is exemplary, and a similar name may be used for referring to a timer related to HARQ retransmission in SL.

According to an embodiment of the present disclosure, a method for solving the case of misalignment with respect to the start time of an SL DRX inactivity timer between a transmitting UE and a receiving UE has been proposed. Through the proposed method, there may be an effect of synchronizing an SL DRX operation between a transmitting UE and a receiving UE (synchronization related to the start time of the sleep mode and the time of transition to the active time).

In the present disclosure, the following UE SL DRX operation is also proposed.

According to an embodiment of the present disclosure, a transmitting UE may transmit transmission resource information to a receiving UE by including it in SCI. For example, a receiving UE may check transmission resource information included in SCI by a transmitting UE and decode a PSSCH (SL data) transmitted by the transmitting UE.

For example, when resource reselection based on pre-emption, UL/SL prioritization, SL/SL prioritization, and congestion control is triggered in the process of a transmitting UE transmitting a MAC PDU, or selecting a transmission resource for transmitting the MAC PDU, a method of performing resource reselection in a range (or within a resource existing within the range) before and/or after a few (specific) slots (or before and/or after) of the location of the next reserved resource indicated by the prior SCI by the transmitting UE is proposed. For example, the UL/SL prioritization procedure may be a procedure of determining which of UL data and SL data is to be transmitted first by determining superiority of transmission priority, when UL data to be transmitted and SL data exist at the same time (e.g., overlapping). For example, the SL/SL prioritization procedure may be a procedure of determining superiority of transmission priority so that SL data having a high priority can be transmitted first, when there are multiple data to be transmitted (for example, overlapping) and the sl-priority of the multiple data is different. For example, a reselected transmission resource may be indicated to a receiving UE through a new SCI.

In addition, for example, when the transmitting UE performs resource reselection in the range of several (specific) slots before and/or after (or before and/or after) of the next resource location indicated through the previous SCI and transmitting SL data (PSSCH), in order to successfully receive this, the receiving UE may operate with an active time in the range of several (specific) slots before and/or after (or before and/or after) based on the location of the transmission resource indicated through the (previous) SCI. Through this, the receiving UE may smoothly receive SCI (PSCCH/PSSCH) including information related to a resource reselected by the transmitting UE.

Or, for example, when the transmitting UE performs resource reselection in the range of a several (specific) slots before and/or after (or before and/or after) the next resource location indicated through the previous SCI and transmits SL data, in order to successfully receive this, the receiving UE may operate as an active time by starting an SL DRX timer (e.g., an SL DRX inactivity timer) before several (specific) slots of a transmission resource location indicated in (previous) SCI. Through this, the receiving UE may smoothly receive SCI (PSCCH/PSSCH) including information related to a resource reselected by the transmitting UE.

For example, the proposals of the present disclosure may be applied limitedly to the SL HARQ feedback enabled mode.

Or, for example, the proposals of the present disclosure may be applied limitedly to the SL HARQ feedback disabled mode.

Or, for example, the proposals of the present disclosure may be equally applied in both the SL HARQ feedback enabled mode and the SL HARQ feedback disabled mode.

For example, the proposal of the present disclosure may be a solution applicable even when a UE operates in transmission resource allocation mode 1.

For example, an SL DRX timer below mentioned in this disclosure may be used for the following purposes.

SL DRX on-duration timer: it may indicate a period in which a UE performing an SL DRX operation should basically operate as an active time in order to receive a PSCCH/PSSCH of a counterpart UE.

SL DRX inactivity timer: it may indicate a period in which a UE performing an SL DRX operation extends an SL DRX on-duration period, which is a period in which an active time is basically required to receive a PSCCH/PSSCH of a counterpart UE. That is, an SL DRX on-duration timer may be extended by an SL DRX inactivity timer period. In addition, when a UE receives a new packet (transmission of a new PSSCH) from another UE, the UE may extend an SL DRX on-duration timer by starting an SL DRX inactivity timer.

SL DRX HARQ RTT timer: it may indicate a period in which a UE performing an SL DRX operation operates in a sleep mode until it receives a retransmission packet (or PSSCH assignment) transmitted from a counterpart UE. That is, when a UE starts an SL DRX HARQ RTT timer, the UE determines that other UEs will not transmit an SL retransmission packet to itself until the SL DRX HARQ RTT timer expires, and may operate in sleep mode during the timer.

SL DRX retransmission timer: may indicate a period in which a UE performing SL DRX operation operates as an active time to receive a retransmission packet (or PSSCH allocation) transmitted by a counterpart UE. During this timer period, the UE may monitor reception of a retransmission sidelink packet (or PSSCH allocation) transmitted by the counterpart UE.

For example, in the following description, the names of timers (SL DRX On-Duration Timer, SL DRX Inactivity Timer, SL DRX HARQ RTT Timer, SL DRX Retransmission Timer, etc.) are exemplary, and timers that perform the same/similar functions based on the contents described in each timer may be regarded as the same/similar timers regardless of their names.

For example, the proposal of the present disclosure is a solution that can be applied and expanded as a method to solve the problem of loss due to interference occurring during Uu bandwidth part (BWP) switching.

In addition, for example, when a UE supports SL multiple BWP, it is a solution that can be applied and expanded as a method to solve the problem of loss due to interference occurring during SL BWP switching.

For example, the proposal of the present disclosure may be extended and applied not only to a parameter (and timer) included in a default/common SL DRX configuration or default/common SL DRX patterns or default/common SL DRX configuration, but also to parameters (and timers) included in UE pair-specific SL DRX configuration or UE pair-specific SL DRX pattern or UE pair-specific SL DRX configuration.

Also, for example, an on-duration term mentioned in the proposal of the present disclosure may be interpreted as an active time interval, and an off-duration term may be extended and interpreted as a sleep time interval. For example, an active time may mean a period in which a UE operates in a wake up state (a state in which an RF module is On) in order to receive/transmit a wireless signal. For example, a sleep time may mean a period in which a UE operates in a sleep mode state (a state in which an RF module is Off) for power saving. For example, a sleep time period does not mean that a transmitting UE must operate in a sleep mode compulsorily. That is, if necessary, even in a sleep time period, a UE may be allowed to operate for a short time in an active time to perform a sensing operation/transmission operation.

In addition, for example, whether the (some) proposed method/rule of the present disclosure is applied and/or related parameters (e.g., threshold) may be configured specifically (or differently, or independently) according to a resource pool, congestion level, service priority (and/or type), QoS requirements (e.g. delay, reliability), traffic type (e.g. (non)periodic generation), SL transmission resource allocation mode (Mode 1, Mode 2), etc.

For example, whether the proposed rule of the present disclosure is applied (and/or related parameter configuration value) may be configured specifically (and/or independently and/or differently) for at least one of a resource pool, service/packet type (and/or priority), QoS requirements (e.g., URLLC/EMBB traffic, reliability, delay), PQI, cast type (e.g., unicast, groupcast, broadcast), (resource pool) congestion level (e.g., CBR), SL HARQ feedback scheme (e.g., NACK Only feedback), ACK/NACK feedback), the case of HARQ feedback enabled MAC PDU (and/or HARQ feedback disabled MAC PDU) transmission, the case of PUCCH-based SL HARQ feedback reporting operation configuration, pre-emption (and/or re-evaluation) performance (or based resource reselection), (L2 or L1) (source and/or destination) identifier, (L2 or L1) (combination of source layer ID and destination layer ID) identifier, (L2 or L1) (source layer ID, and destination layer ID and cast type combination) identifier, a direction of a pair of source layer ID and destination layer ID, PC5 RRC connection/link, SL DRX performing case, an SL mode type (resource allocation mode 1, resource allocation mode 2), (a)periodic resource reservation execution case.

For example, a constant time term mentioned in the proposal of this disclosure may indicate a time during which a UE operates as an active time for a predefined time, or operates as an active time for a time or a specific timer (SL DRX retransmission timer, SL DRX inactivity timer, or a timer that guarantees to operate as active time in a DRX operation of a receiving UE) time in order to receive an SL signal or SL data from a counterpart UE.

Also, for example, whether the proposal and proposal rule of the present disclosure are applied (and/or related parameter configuration values) may also be applied to mmWave SL operation.

According to an embodiment of the present disclosure, a receiving UE receiving an SCI that can indicate a maximum of three resources may smoothly receive the transmission performed by a transmitting UE through a reselected resource despite the triggering of the re-evaluation/reselection.

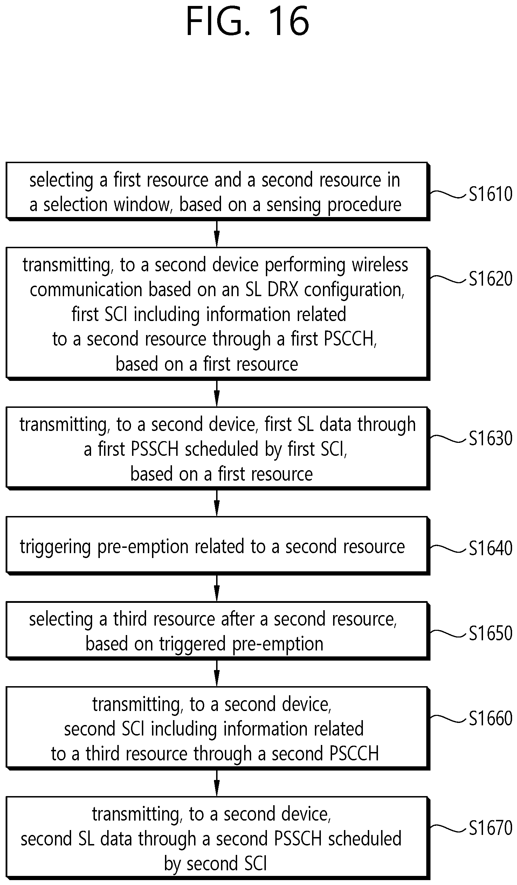

FIG. 16 shows a procedure in which a first device performs wireless communication, according to an embodiment of the present disclosure. The embodiment of FIG. 16 may be combined with various embodiments of the present disclosure.

Referring to FIG. 16, in step S1610, a first device performing wireless communication may select a first resource and a second resource in a selection window, based on a sensing procedure. In step S1620, the first device may transmit, to a second device performing wireless communication based on a sidelink, SL, discontinuous reception, DRX, configuration, first sidelink control information, SCI, including information related to the second resource through a first physical sidelink control channel, PSCCH, based on the first resource. In step S1630, the first device may transmit, to the second device, first SL data through a first physical sidelink shared channel, PSSCH, scheduled by the first SCI, based on the first resource. In step S1640, the first device may trigger pre-emption related to the second resource. In step S1650, the first device may select a third resource after the second resource, based on the triggered pre-emption. For example, a third resource before the second resource being selected may be not allowed. In step S1660, the first device may transmit, to the second device, second SCI including information related to the third resource through a second PSCCH. In step S1670, the first device may transmit, to the second device, second SL data through a second PSSCH scheduled by the second SCI.

For example, the SL DRX configuration may include information related to a timer related to active time and information related to an SL DRX cycle, and the timer related to active time may include an SL DRX inactivity timer.

For example, an SL DRX inactivity timer may be started by the second device, based on the first SCI, and an interval in which the SL DRX inactivity timer is running may be active time.

For example, the SL DRX inactivity timer may be started based on the information related to the second resource.

For example, the SL DRX inactivity timer may be started in a slot earlier than the second resource by a first value.

For example, the SL DRX inactivity timer may expire after running as long as a timer value.

For example, the third resource may be located in a time interval from when the SL DRX inactivity timer is started and before the SL DRX inactivity timer expires.

For example, the second SCI may be transmitted to the second device based on the third resource.

For example, the second SL data may be transmitted to the second device based on the third resource.

For example, the wireless communication performed by the first device may be performed in a mode in which SL hybrid automatic repeat request, HARQ, feedback is enabled.

For example, the wireless communication performed by the first device may be performed in a mode in which SL HARQ feedback is disabled.

For example, the SL DRX configuration may be a default SL DRX configuration or a common SL DRX configuration.

For example, the SL DRX configuration may be an SL DRX configuration related to a pair of the first device and the second device.

The above-described embodiment can be applied to various devices to be described below. For example, a processor 102 of a first device 100 performing wireless communication may select a first resource and a second resource in a selection window, based on a sensing procedure. And, the processor 102 of the first device 100 may control a transceiver 106 to transmit, to a second device 200 performing wireless communication based on a sidelink, SL, discontinuous reception, DRX, configuration, first sidelink control information, SCI, including information related to the second resource through a first physical sidelink control channel, PSCCH, based on the first resource. And, the processor 102 of the first device 100 may control the transceiver 106 to transmit, to the second device 200, first SL data through a first physical sidelink shared channel, PSSCH, scheduled by the first SCI, based on the first resource. And, the processor 102 of the first device 100 may trigger pre-emption related to the second resource. And, the processor 102 of the first device 100 may select a third resource after the second resource, based on the triggered pre-emption. For example, a third resource before the second resource being selected may be not allowed. And, the processor 102 of the first device 100 may control the transceiver 106 to transmit, to the second device 200, second SCI including information related to the third resource through a second PSCCH. And, the processor 102 of the first device 100 may control the transceiver 106 to transmit, to the second device 200, second SL data through a second PSSCH scheduled by the second SCI.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: select a first resource and a second resource in a selection window, based on a sensing procedure; transmit, to a second device performing wireless communication based on a sidelink, SL, discontinuous reception, DRX, configuration, first sidelink control information, SCI, including information related to the second resource through a first physical sidelink control channel, PSCCH, based on the first resource; transmit, to the second device, first SL data through a first physical sidelink shared channel, PSSCH, scheduled by the first SCI, based on the first resource; trigger pre-emption related to the second resource; select a third resource after the second resource, based on the triggered pre-emption, wherein a third resource before the second resource being selected may be not allowed; transmit, to the second device, second SCI including information related to the third resource through a second PSCCH; and transmit, to the second device, second SL data through a second PSSCH scheduled by the second SCI.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: select a first resource and a second resource in a selection window, based on a sensing procedure; transmit, to a second UE performing wireless communication based on a sidelink, SL, discontinuous reception, DRX, configuration, first sidelink control information, SCI, including information related to the second resource through a first physical sidelink control channel, PSCCH, based on the first resource; transmit, to the second UE, first SL data through a first physical sidelink shared channel, PSSCH, scheduled by the first SCI, based on the first resource; trigger pre-emption related to the second resource; select a third resource after the second resource, based on the triggered pre-emption, wherein a third resource before the second resource being selected may be not allowed; transmit, to the second UE, second SCI including information related to the third resource through a second PSCCH; and transmit, to the second UE, second SL data through a second PSSCH scheduled by the second SCI.

According to an embodiment of the present disclosure, a non-transitory computer-readable storage medium storing instructions may be proposed. For example, the instructions, when executed, may cause a first device to: select a first resource and a second resource in a selection window, based on a sensing procedure; transmit, to a second device performing wireless communication based on a sidelink, SL, discontinuous reception, DRX, configuration, first sidelink control information, SCI, including information related to the second resource through a first physical sidelink control channel, PSCCH, based on the first resource; transmit, to the second device, first SL data through a first physical sidelink shared channel, PSSCH, scheduled by the first SCI, based on the first resource; trigger pre-emption related to the second resource; select a third resource after the second resource, based on the triggered pre-emption, wherein a third resource before the second resource being selected may be not allowed; transmit, to the second device, second SCI including information related to the third resource through a second PSCCH; and transmit, to the second device, second SL data through a second PSSCH scheduled by the second SCI.

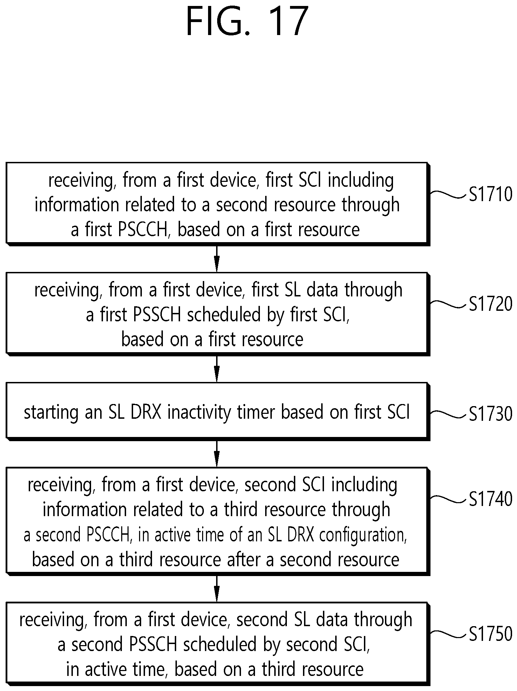

FIG. 17 shows a procedure in which a second device performs wireless communication, according to an embodiment of the present disclosure. The embodiment of FIG. 17 may be combined with various embodiments of the present disclosure.

Referring to FIG. 17, in step S1710, a second device may receive, from a first device, first sidelink control information, SCI, including information related to a second resource through a first physical sidelink control channel, PSCCH, based on a first resource. In step S1720, the second device may receive, from the first device, first SL data through a first physical sidelink shared channel, PSSCH, scheduled by the first SCI, based on the first resource. In step S1730, the second device may start an SL DRX inactivity timer based on the first SCI. In step S1730, the second device may receive, from the first device, second SCI including information related to a third resource through a second PSCCH, in active time of the SL DRX configuration, based on the third resource after the second resource. In step S1740, the second device may receive, from the first device, second SL data through a second PSSCH scheduled by the second SCI, in the active time, based on the third resource.

For example, the SL DRX inactivity timer may be started in a slot earlier than the second resource by a first value.

The above-described embodiment can be applied to various devices to be described below. For example, a processor 202 of a second device 200 may control a transceiver 206 to receive, from a first device 100, first sidelink control information, SCI, including information related to a second resource through a first physical sidelink control channel, PSCCH, based on a first resource. And, the processor 202 of the second device 200 may control the transceiver 206 to receive, from the first device 100, first SL data through a first physical sidelink shared channel, PSSCH, scheduled by the first SCI, based on the first resource. And, the processor 202 of the second device 200 may start an SL DRX inactivity timer based on the first SCI. And, the processor 202 of the second device 200 may control the transceiver 206 to receive, from the first device 100, second SCI including information related to a third resource through a second PSCCH, in active time of the SL DRX configuration, based on the third resource after the second resource. And, the processor 202 of the second device 200 may control the transceiver 206 to receive, from the first device 100, second SL data through a second PSSCH scheduled by the second SCI, in the active time, based on the third resource.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, first sidelink control information, SCI, including information related to a second resource through a first physical sidelink control channel, PSCCH, based on a first resource; receive, from the first device, first SL data through a first physical sidelink shared channel, PSSCH, scheduled by the first SCI, based on the first resource; start an SL DRX inactivity timer based on the first SCI; receive, from the first device, second SCI including information related to a third resource through a second PSCCH, in active time of the SL DRX configuration, based on the third resource after the second resource; and receive, from the first device, second SL data through a second PSSCH scheduled by the second SCI, in the active time, based on the third resource.

For example, the SL DRX inactivity timer may be started in a slot earlier than the second resource by a first value.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

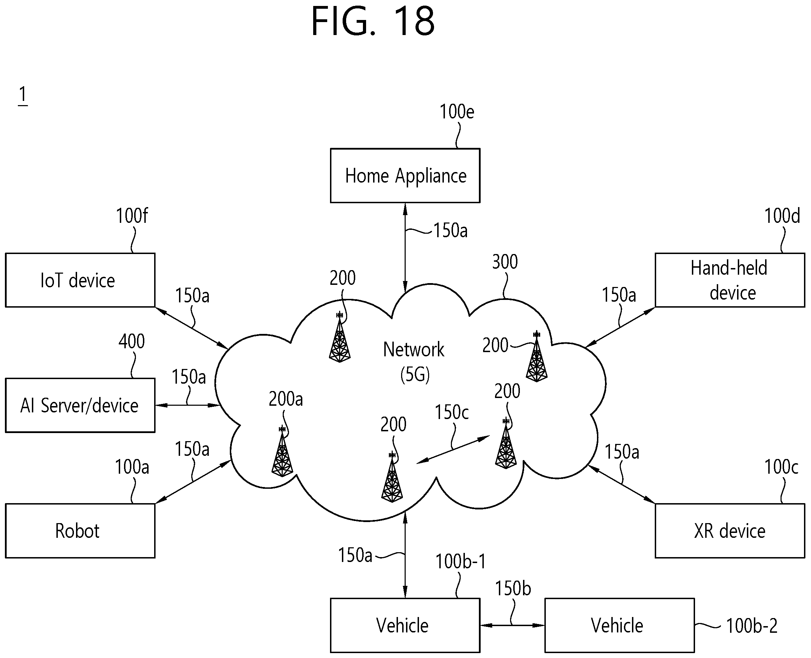

FIG. 18 shows a communication system 1, based on an embodiment of the present disclosure. The embodiment of FIG. 18 may be combined with various embodiments of the present disclosure.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

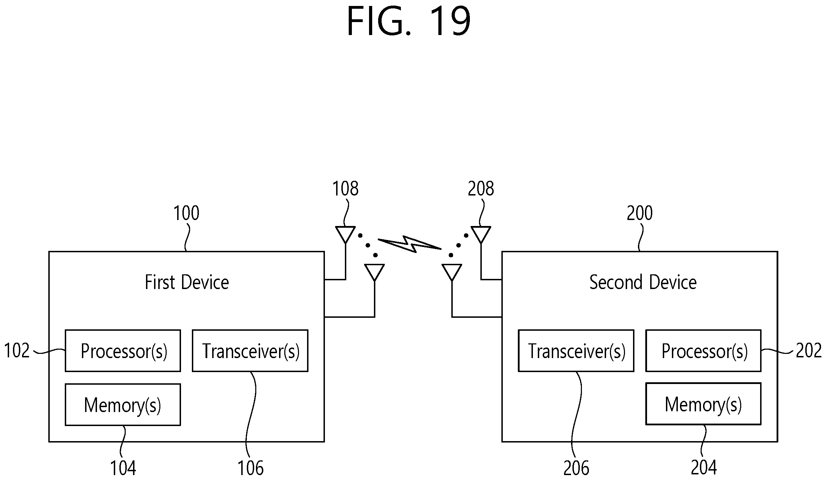

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

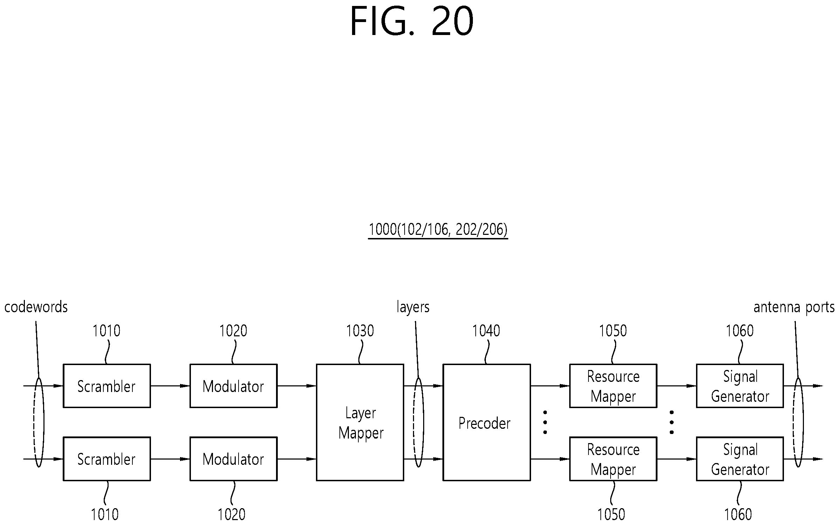

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an $N*M$ precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

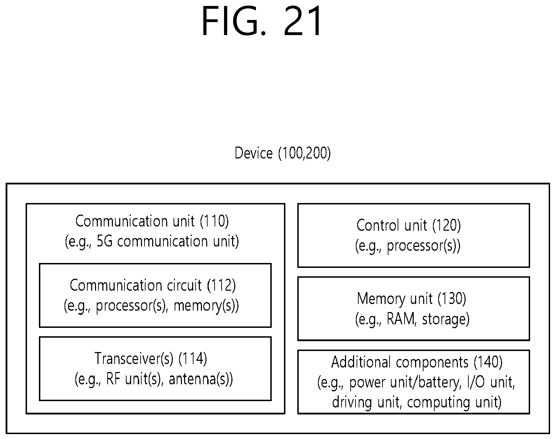

FIG. 21 shows another example of a wireless device, based on an embodiment of the present disclosure. The wireless device may be implemented in various forms according to a use-case/service (refer to FIG. 18). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

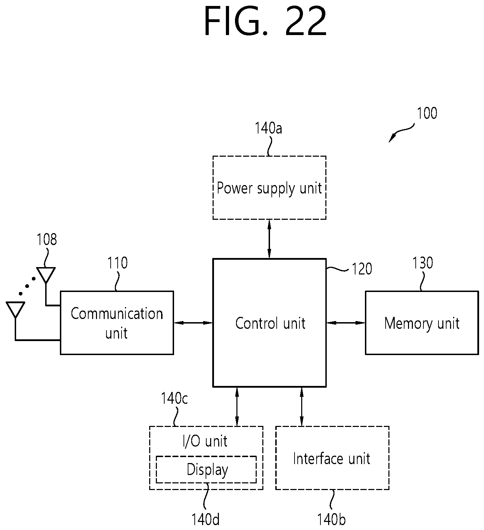

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

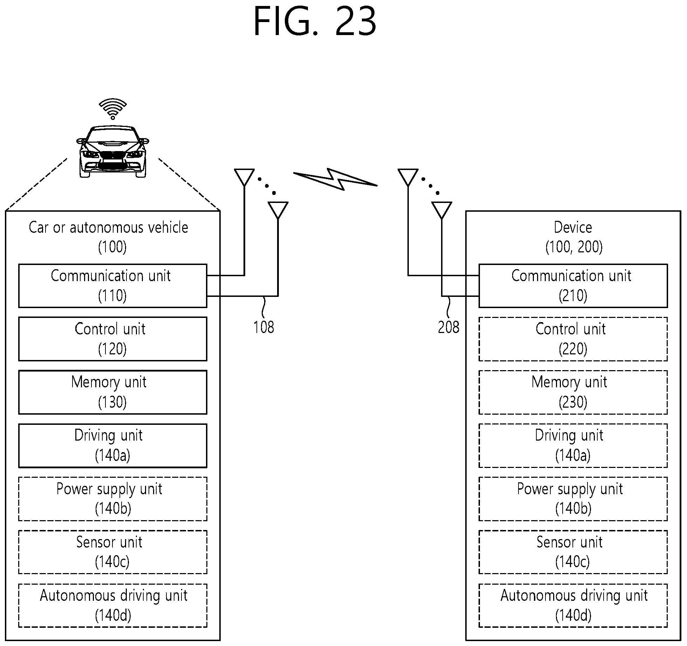

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method for performing, by a first device, wireless communication, the method comprising:

    selecting a first resource and a second resource in a selection window, based on a sensing procedure;
    transmitting, to a second device performing wireless communication based on a sidelink, SL, discontinuous reception, DRX, configuration, first sidelink control information, SCI, including information related to the second resource through a first physical sidelink control channel, PSCCH, based on the first resource;
    transmitting, to the second device, first SL data through a first physical sidelink shared channel, PSSCH, scheduled by the first SCI, based on the first resource;
    triggering pre-emption related to the second resource;
    selecting a third resource after the second resource, based on the triggered pre-emption,
    wherein a third resource before the second resource being selected is not allowed;
    transmitting, to the second device, second SCI including information related to the third resource through a second PSCCH; and
    transmitting, to the second device, second SL data through a second PSSCH scheduled by the second SCI.

2.  The method of claim 1, wherein the SLDRX configuration includes information related to a timer related to active time and information related to an SL DRX cycle, and
    wherein the timer related to active time includes an SL DRX inactivity timer.

3.  The method of claim 1, wherein an SL DRX inactivity timer is started by the second device, based on the first SCI, and wherein an interval in which the SL DRX inactivity timer is running is active time.

4.  The method of claim 3, wherein the SL DRX inactivity timer is started based on the information related to the second resource.

5.  The method of claim 4, wherein the SL DRX inactivity timer is started in a slot earlier than the second resource by a first value.

6.  The method of claim 3, wherein the SL DRX inactivity timer expires after running as long as a timer value.

7.  The method of claim 3, wherein the third resource is located in a time interval from when the SL DRX inactivity timer is started and before the SL DRX inactivity timer expires.

8.  The method of claim 1, wherein the second SCI is transmitted to the second device based on the third resource.

9.  The method of claim 1, wherein the second SL data is transmitted to the second device based on the third resource.

10. The method of claim 1, wherein the wireless communication performed by the first device is performed in a mode in which SL hybrid automatic repeat request, HARQ, feedback is enabled.

11. The method of claim 1, wherein the wireless communication performed by the first device is performed in a mode in which SL HARQ feedback is disabled.

12. The method of claim 1, wherein the SL DRX configuration is a default SL DRX configuration or a common SL DRX configuration.

13. The method of claim 1, wherein the SL DRX configuration is an SL DRX configuration related to a pair of the first device and the second device.

14. A first device for performing wireless communication, the first device comprising:

one or more memories storing instructions;
one or more transceivers; and
one or more processors connected to the one or more memories and the one or more transceivers, wherein the one or more processors execute the instructions to:

select a first resource and a second resource in a selection window, based on a sensing procedure;
transmit, to a second device performing wireless communication based on a sidelink, SL, discontinuous reception, DRX, configuration, first sidelink control information, SCI, including information related to the second resource through a first physical sidelink control channel, PSCCH, based on the first resource;
transmit, to the second device, first SL data through a first physical sidelink shared channel, PSSCH, scheduled by the first SCI, based on the first resource;
trigger pre-emption related to the second resource;
select a third resource after the second resource, based on the triggered pre-emption, wherein a third resource before the second resource being selected is not allowed;
transmit, to the second device, second SCI including information related to the third resource through a second PSCCH; and
transmit, to the second device, second SL data through a second PSSCH scheduled by the second SCI.

15. A device adapted to control a first user equipment, UE, the device comprising:

one or more processors; and
one or more memories operably connectable to the one or more processors and storing instructions, wherein the one or more processors execute the instructions to:

select a first resource and a second resource in a selection window, based on a sensing procedure;
transmit, to a second UE performing wireless communication based on a sidelink, SL, discontinuous reception, DRX, configuration, first sidelink control information, SCI, including information related to the second resource through a first physical sidelink control channel, PSCCH, based on the first resource;
transmit, to the second UE, first SL data through a first physical sidelink shared channel, PSSCH, scheduled by the first SCI, based on the first resource;
trigger pre-emption related to the second resource;
select a third resource after the second resource, based on the triggered pre-emption, wherein a third resource before the second resource being selected is not allowed;
transmit, to the second UE, second SCI including information related to the third resource through a second PSCCH; and
transmit, to the second UE, second SL data through a second PSSCH scheduled by the second SCI.

16. A non-transitory computer-readable storage medium storing instructions that, when executed, cause a first device to:

select a first resource and a second resource in a selection window, based on a sensing procedure;
transmit, to a second device performing wireless communication based on a sidelink, SL, discontinuous reception, DRX, configuration, first sidelink control information, SCI, including information related to the second resource through a first physical sidelink control channel, PSCCH, based on the first resource;
transmit, to the second device, first SL data through a first physical sidelink shared channel, PSSCH, scheduled by the first SCI, based on the first resource;
trigger pre-emption related to the second resource;
select a third resource after the second resource, based on the triggered pre-emption, wherein a third resource before the second resource being selected is not allowed;
transmit, to the second device, second SCI including information related to the third resource through a second PSCCH; and
transmit, to the second device, second SL data through a second PSSCH scheduled by the second SCI.

17. A method for performing, by a second device, wireless communication based on a sidelink, SL, discontinuous reception, DRX, configuration, the method comprising:

receiving, from a first device, first sidelink control information, SCI, including information related to a second

29

resource through a first physical sidelink control channel, PSCCH, based on a first resource;

receiving, from the first device, first SL data through a first physical sidelink shared channel, PSSCH, scheduled by the first SCI, based on the first resource;

starting an SL DRX inactivity timer based on the first SCI;

receiving, from the first device, second SCI including information related to a third resource through a second PSCCH, in active time of the SL DRX configuration, based on the third resource after the second resource; and

receiving, from the first device, second SL data through a second PSSCH scheduled by the second SCI, in the active time, based on the third resource.

18. The method of claim 17, wherein the SL DRX inactivity timer is started in a slot earlier than the second resource by a first value.

19. A second device for performing wireless communication, the second device comprising:

one or more memories storing instructions;

one or more transceivers; and

one or more processors connected to the one or more memories and the one or more transceivers, wherein the one or more processors execute the instructions to:

receive, from a first device, first sidelink control information, SCI, including information related to a second resource through a first physical sidelink control channel, PSCCH, based on a first resource;

receive, from the first device, first SL data through a first physical sidelink shared channel, PSSCH, scheduled by the first SCI, based on the first resource;

start an SL DRX inactivity timer based on the first SCI;

receive, from the first device, second SCI including information related to a third resource through a second PSCCH, in active time of the SL DRX configuration, based on the third resource after the second resource; and

receive, from the first device, second SL data through a second PSSCH scheduled by the second SCI, in the active time, based on the third resource.

20. The second device of claim 19, wherein the SL DRX inactivity timer is started in a slot earlier than the second resource by a first value.

# FIG. 1

# FIG. 2

(a)

(b)

(c) PC5-U

(d) PC5-C

# FIG. 3

· · · | One Frame (10ms) | · · ·

· · · | Half-Frame (5ms) | Half-Frame (5ms) | · · ·

· · · | Subframe 0 (1ms) | · · · | Subframe 4 (1ms) | Subframe 5 (1ms) | · · · | Subframe 9 (1ms) | · · ·

Subframe (1ms)

15KHz | Slot 0 (14symbols)

1ms

30KHz | Slot 0 (14symbols) | Slot 1

500us

60KHz | Slot 0 (14symbols) | Slot 1 | Slot 2 | Slot 3

250us

120KHz | Slot 0 (14symbols) | Slot 1 | Slot 2 | Slot 3 | Slot 4 | Slot 5 | Slot 6 | Slot 7

125us

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

# FIG. 5

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier
Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 6

BS     UE 1     UE 2        UE 1     UE 2

resource
scheduling    S600

PSCCH    S610        PSCCH    S610

PSSCH    S620        PSSCH    S620

PSFCH    S630        PSFCH    S630

PUCCH/PUSCH    S640

(a)                 (b)

# FIG. 7

(a)  (b)  (c)

● : TX UE
⊘ : RX UE

# FIG. 8

first resource
(PSCCH/PSSCH
transmission)

second resource
(PSCCH/PSSCH
transmission)

last resource
(PSCCH/PSSCH
transmission)

transmitting
UE side

SL DRX on-duration of a receiving UE

SL DRX inactivity timer

PSCCH/PSSCH reception

receiving
UE side

SL DRX on-duration of a receiving UE

a time interval that is misunderstood,
between a transmitting UE and a receiving UE,
for a time interval in which an SL DRX
inactivity timer is running

SL DRX inactivity timer

# FIG. 9

first resource
(PSCCH/PSSCH
transmission)

second resource
(PSCCH/PSSCH
transmission)

last resource
(PSCCH/PSSCH
transmission)

transmitting
UE side

SL DRX on-duration of a receiving UE

a transmitting UE determines that
a receiving UE starts an SL DRX
inactivity timer here

first resource

second resource

last resource

receiving
UE side

SL DRX on-duration of a receiving UE

starts an SL DRX inactivity timer here

EP 4 280 771 A1

# FIG. 10

first resource
(PSCCH/PSSCH
transmission)

second resource
(PSCCH/PSSCH
transmission)

last resource
(PSCCH/PSSCH
transmission)

transmitting
UE side

SL DRX on-duration of a receiving UE

a transmitting UE determines that
a receiving UE starts an SL DRX
inactivity timer here

first resource

second resource

last resource

receiving
UE side

SL DRX on-duration of a receiving UE

starts an SL DRX inactivity timer here

EP 4 280 771 A1

# FIG. 11

first resource
(PSCCH/PSSCH
transmission)

second resource
(PSCCH/PSSCH
transmission)

last resource
(PSCCH/PSSCH
transmission)

transmitting
UE side

SL DRX on-duration of a receiving UE

a transmitting UE determines that
a receiving UE starts an SL DRX
inactivity timer here

first resource

second resource

last resource

receiving
UE side

SL DRX on-duration of a receiving UE

starts an SL DRX
inactivity timer here

EP 4 280 771 A1

# FIG. 12

first resource
(PSCCH/PSSCH transmission,
initial transmission or
retransmission indication)

second resource
(PSCCH/PSSCH transmission,
initial transmission or
retransmission indication)

last resource
(PSCCH/PSSCH transmission,
initial transmission or
retransmission indication)

transmitting
UE side

SL DRX on-duration of a receiving UE

a transmitting UE determines that
a receiving UE starts an SL DRX
retransmission timer here

first resource
(miss PSCCH/PSSCH
reception)

second resource
(PSCCH/PSSCH reception,
retransmission indication)

receiving
UE side

SL DRX on-duration of a receiving UE

starts an SL DRX
retransmission timer here

# FIG. 13

**transmitting UE side**

first resource (PSCCH/PSSCH transmission) · first resource (PSCCH/PSSCH transmission) · first resource (PSCCH/PSSCH transmission) · first resource (PSCCH/PSSCH transmission)

SL DRX on-duration of a receiving UE

SL DRX inactivity timer

a transmitting UE determines that a receiving UE starts an SL DRX inactivity timer here (first resource of SCI)

**receiving UE side**

reception of first transmission · reception of second transmission · reception of third transmission · reception of last transmission

SL DRX on-duration of a receiving UE

SL DRX inactivity timer

a receiving UE starts an SL DRX inactivity timer here (first resource of SCI)

EP 4 280 771 A1

FIG. 14

# FIG. 15

first resource (PSCCH/PSSCH transmission) · second resource (PSCCH/PSSCH transmission) · third resource (PSCCH/PSSCH transmission) · fourth resource (PSCCH/PSSCH transmission) · last resource (PSCCH/PSSCH transmission)

transmitting UE side

reception of first transmission · reception of second transmission · reception of third transmission · reception of fourth transmission · reception of last transmission

receiving UE side

SL DRX inactivity timer

SL DRX inactivity timer

SL DRX inactivity timer

EP 4 280 771 A1

# FIG. 16

selecting a first resource and a second resource in a selection window, based on a sensing procedure ⟶ S1610

transmitting, to a second device performing wireless communication based on an SL DRX configuration, first SCI including information related to a second resource through a first PSCCH, based on a first resource ⟶ S1620

transmitting, to a second device, first SL data through a first PSSCH scheduled by first SCI, based on a first resource ⟶ S1630

triggering pre-emption related to a second resource ⟶ S1640

selecting a third resource after a second resource, based on triggered pre-emption ⟶ S1650

transmitting, to a second device, second SCI including information related to a third resource through a second PSCCH ⟶ S1660

transmitting, to a second device, second SL data through a second PSSCH scheduled by second SCI ⟶ S1670

# FIG. 17

receiving, from a first device, first SCI including information related to a second resource through a first PSCCH, based on a first resource ⟋S1710

receiving, from a first device, first SL data through a first PSSCH scheduled by first SCI, based on a first resource ⟋S1720

starting an SL DRX inactivity timer based on first SCI ⟋S1730

receiving, from a first device, second SCI including information related to a third resource through a second PSCCH, in active time of an SL DRX configuration, based on a third resource after a second resource ⟋S1740

receiving, from a first device, second SL data through a second PSSCH scheduled by second SCI, in active time, based on a third resource ⟋S1750

# FIG. 18

<u>1</u>

# FIG. 19

# FIG. 20

1000(102/106, 202/206)

codewords — 1010 Scrambler → 1020 Modulator → 1030 Layer Mapper → layers → 1040 Precoder → 1050 Resource Mapper → 1060 Signal Generator → antenna ports

1010 Scrambler → 1020 Modulator → Layer Mapper → Precoder → 1050 Resource Mapper → 1060 Signal Generator

# FIG. 21

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 22

# FIG. 23

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

EP 4 280 771 A1

## INTERNATIONAL SEARCH REPORT

| International application No. |
| --- |
| **PCT/KR2022/000555** |

**A. CLASSIFICATION OF SUBJECT MATTER**

**H04W 72/12**(2009.01)i; **H04W 72/02**(2009.01)i; **H04W 76/28**(2018.01)i; **H04W 28/26**(2009.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/12(2009.01); H04B 7/0413(2017.01); H04W 4/40(2018.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 센싱(sensing), 선택 윈도우(selection window), PSCCH, SCI, PSSCH, 프리앰션 (pre-emption), DRX configuration, cycle, inactivity timer, SL HARQ feedback enabled, SL HARQ feedback disabled, default, common, pair

**C. DOCUMENTS CONSIDERED TO BE RELEVANT**

| Category* | Citation of document, with indication, where appropriate, of the relevant passages | Relevant to claim No. |
| --- | --- | --- |
| Y | US 2020-0229171 A1 (INTEL CORPORATION) 16 July 2020 (2020-07-16)<br>See paragraph [0213]; and claims 1, 4 and 10. | 1-20 |
| Y | LG ELECTRONICS. Discussion on feasibility and benefits for mode 2 enhancement. R1-2007896, 3GPP TSG RAN WG1 Meeting #103-e, e-Meeting. 01 November 2020.<br>See section 2.1. | 1-20 |
| Y | HUAWEI et al. Consideration on the sidelink DRX for unicast, groupcast and broadcast. R2-2009413, 3 GPP TSG-RAN WG2 Meeting #112 electronic. 23 October 2020.<br>See sections 2.1.1-2.1.3; and figure 1. | 2-7,12-13,17-20 |
| A | MODERATOR (OPPO). FL summary for AI 8.11.2.1 – resource allocation for power saving. R1-2009584, 3GPP TSG RAN WG1 #103-e, e-Meeting. 17 November 2020.<br>See section 3. | 1-20 |
| A | KR 10-2020-0093517 A (LG ELECTRONICS INC.) 05 August 2020 (2020-08-05)<br>See paragraphs [0103]-[0145]; and claims 1 and 5-7. | 1-20 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 April 2022** | **18 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000555**

| Patent document cited in search report | Publication date (day/month/year) | Patent family member(s) | | Publication date (day/month/year) |
|---|---|---|---|---|
| US 2020-0229171 A1 | 16 July 2020 | None | | |
| KR 10-2020-0093517 A | 05 August 2020 | CN | 111727575 A | 29 September 2020 |
| | | EP | 3706348 A1 | 09 September 2020 |
| | | JP | 2021-514550 A | 10 June 2021 |
| | | US | 2020-0288435 A1 | 10 September 2020 |
| | | WO | 2020-153812 A1 | 30 July 2020 |

Form PCT/ISA/210 (patent family annex) (July 2019)